# EUROPÄISCHE PATENTANMELDUNG

(11) **EP 4 802 882 A1**
(43) Veröffentlichungstag der Anmeldung: **09.09.2026**
(21) Anmeldenummer: 25161436.8
(22) Anmeldetag: 03.03.2025
(51) Int. Cl.: A01K 1/00

(54) **MOBILER WEIDEUNTERSTAND**

(71) Anmelder: Kopetzky, Ing. Dr. Gerhard, 3062 Kirchstetten, Niederösterreich (AT)
(72) Erfinder: Kopetzky, Ing. Dr. Gerhard, 3062 Kirchstetten, Niederösterreich (AT)

(57) **Zusammenfassung**

Der Mobile Weideunterstand besteht aus einem verschweißten und verschraubtem Grundrahmen, welcher auf drei Seiten mit Holzpfosten beplankt ist und an der verbleibenden Seite eine hydraulisch klappbare Erweiterung ("Vordach") sowie zwei manuell klappbare Flügel (Seitenwände) aufweist. Weiters verfügt er über eine hydraulisch betätigte Achse ,die ein Anheben und ebenerdiges Absenken des Unterstands ermöglicht, sowie über eine manuell klappbare Deichsel mithilfe dieser der Unterstand im öffentlichen Straßenverkehr bewegt werden kann. Der Unterstand ermöglicht schnelles und unkompliziertes Versetzen bei gleichzeitig größtmöglicher Überdachter und windgeschützter Fläche.

## Beschreibung

Die vorliegende Erfindung bezieht sich auf das Gebiet der landwirtschaftlichen Anhängern, insbesondere der mobilen (fahrbaren) Unterständen.

Die auf dem Markt befindlichen fahrbaren Weideunterstände sind in ihrer Grundfläche, bzw. beschatteten Fläche nicht, oder nur durch manuelles erweitern oder aufklappen von Zusatzdächern, erweiterbar. Außerdem ist der Unterstand oftmals nur mit Steckachsen ausgestattet. Somit ist das herstellen eines transportfähigen Zustands mit erheblichem Aufwand verbunden.

Mit der vorliegenden Erfindung soll ein mobiler Weideunterstand bereitgestellt werden, welcher den transportablen Zustand vollhydraulisch von der Zugmaschine aus herstellt. Hierbei soll der Weideunterstand hydraulisch entfaltbar sein und die Achse hydraulisch ausgehoben werden können. Außerdem soll der Anhänger im Transportzustand die Voraussetzungen für nicht zum Verkehr zugelassene Anhänger gemäß Kraftfahrgesetz 1967 und Kraftfahrgesetz-Durchführungsverordnung 1967 erfüllen.

Gemäß der vorliegenden Erfindung wird ein mobiler Weideunterstand bereitgestellt. Dieser besteht im Wesentlichen aus miteinander verschraubten oder beweglich verbundenen Elementen aus Vierkantrohr. Diese Elemente sind miteinander Verschweißt und vollverzinkt. Der Rahmen ist mit Holzpfosten beplankt. Die Achse ist als geteilte Achse ausgeführt und über Hydraulikzylinder anheb- und absenkbar. Die Achsen sowie die Bereifung liegen innerhalb des Unterstands um die Maximale Breite von 2,55m bei Straßenfahrt einzuhalten und zugleich die größtmöglichen Dimensionen des Unterstands zu ermöglichen. Die Achse ist mittels Traktorseitigem Hydrauliksteuergerät zu betätigen und bei Straßenfahrt über Zylinderseitig verbaute Sperrblöcke gegen plötzliches Absacken gesichert. Die hydraulisch klappbare Erweiterung ("Vordach") befindet sich in Fahrtrichtung links und ist ebenfalls mittels Traktorhydraulik zu betätigen. Es klappt bei Betätigung auf und wird auf 2 Ausschwenkbaren Flügeln im Front- und Heckbereich abgelegt (diese verfügen jeweils über eine mechanisch Betätigte Stütze um Bodenunebenheiten auszugleichen), sodass eine deutliche Vergrößerung der Unterstandsfläche gegeben ist. Der Anhänger wird mittels Ackerschiene an den Unterlenkern des Traktors angehängt. Die hydraulischen Verbindungen erfolgen über Steckkupplungen.

In vorliegender Ausführung ergeben sich bedeutende Vorteile. So ist der transportfähige Zustand von einer Person in wenigen Minuten herstellbar und ein Übersetzen auf öffentlicher Straße mittels Traktor ist möglich. Weiters ergibt sich durch das Vordach und die klappbaren Seitenflügel eine größere beschattete und windgeschützte Fläche.

### Beschreibung der Zeichnungen:

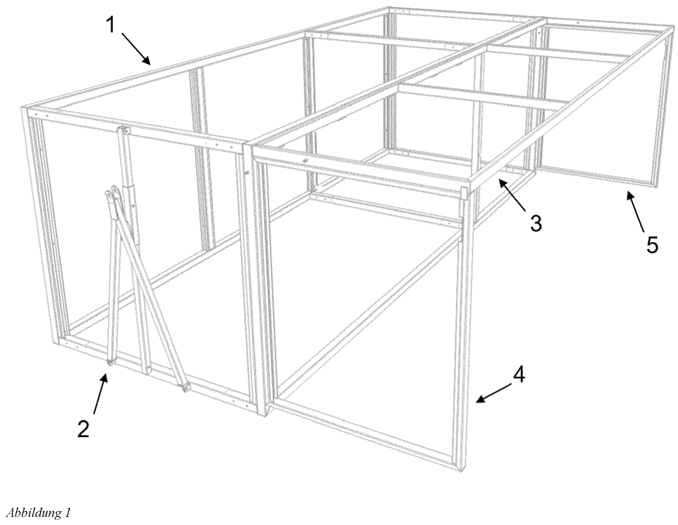

Abb. 1: ist eine perspektivische Ansicht des Grundrahmens inklusive der Anbauteile klappbares Vordach und vorderer und hinterer Flügel sowie der Deichsel

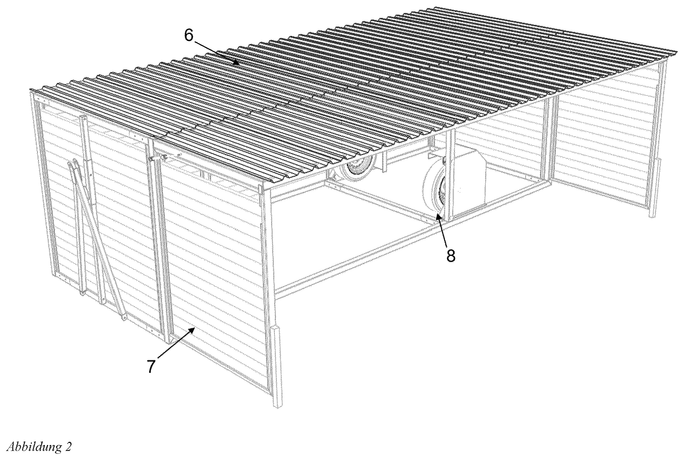

Abb. 2: ist eine perspektivische Ansicht des vollständigen mobilen Weideunterstands ins Arbeitsstellung

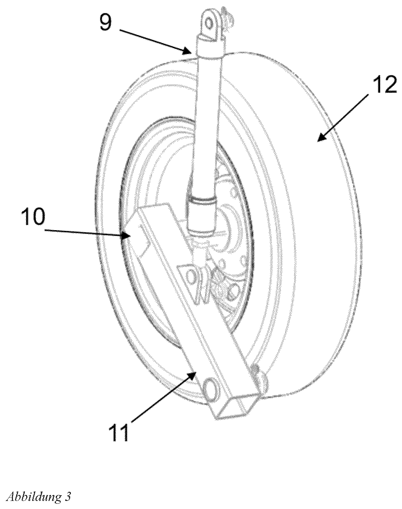

Abb. 3: ist eine Detailansicht der hydraulisch anhebbaren Achse

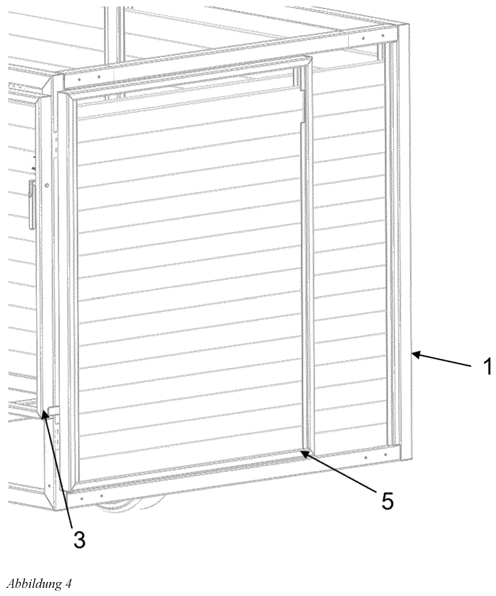

Abb. 4: ist eine Darstellung des eingeklappten, im transportzustand befindlichen, hinteren Flügels
Abb. 5: ist eine perspektivische Ansicht des mobilen Weideunterstands in Transportstellung

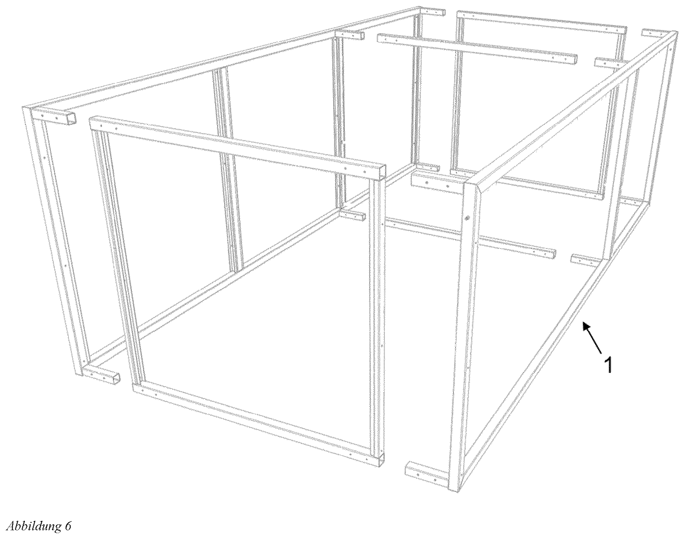

Abb. 6: ist eine perspektivische Ansicht des Grundrahmens in Explosionsansicht

Im Folgenden wird auf die Zeichnungen Bezug genommen. Demnach umfasst ein mobiler Weideunterstand gemäß der bevorzugten Ausführungsform der vorliegenden Erfindung einen Grundrahmen (1), ein klappbares Vordach (3), eine klappbare Deichsel (2), eine hydraulisch betätigte Achse (8), zwei klappbare Flügel (4,5), eine Beplankung des Grundrahmens aus Holzpfosten (7) sowie eine Trapezblechdach (6).

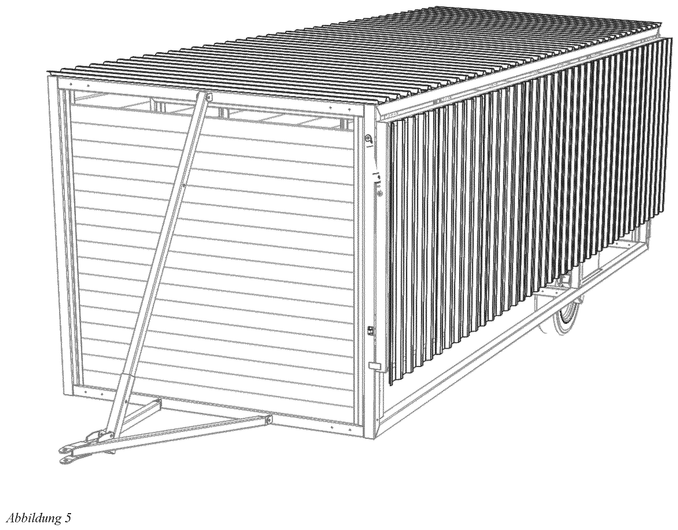

Der aus verschweißten und vollverzinkten Teilelementen zusammengeschraubte Rahmen ist an seinen Hohlstellen mit Holzpfosten Beplankt. Als Bedachung dient ein gedämmtes Trapezblech (6), dieses sorgt zusätzlich für Stabilität und steift die Konstruktion aus. Die Deichsel (2) ist mittels Bolzen beweglich mit dem Grundrahmen verbunden und ist in Transportstellung heruntergeklappt und mittels der dritten Strebe arretiert (siehe Abb. 5). Die Achse ist auf 1/3 der Länge des Anhängers von hinten am Rahmen montiert. Hier sind zusätzlich Vertikale Streben im Grundrahmen integriert um die Last auf den Rahmen zu verteilen.

Die Achse (8) ist als geteilte Achse ausgeführt und besteht jeweils aus einem Achsstummel (10), welcher mit einem Vierkantrohr (11) verschweißt ist (dies kann optional auch als durchgehende Achse ausgeführt werden). Dieses ist mittels einem Bolzen mit dem Grundrahmen verbunden. Der Hydraulikzylinder (9) ,ebenfalls mit dem Grundrahmen verbunden, hebt die Achse in Transportstellung aus. Gegen Plötzliches absacken bei Transportfahrten ist dieser mit einem hydraulischen Sperrblock ausgestattet.

In Fahrtrichtung Links ist das hydraulisch klappbare Vordach (3), welches ebenfalls aus einem verschweißten vollverzinkten Grundrahmen besteht, mittels Schwerlastscharnieren am Grundrahmen befestigt. Das Vordach ist ebenfalls mit gedämmten Trapezblech ausgeführt. Der Klappvorgang erfolgt durch von der Zugmaschine betätigte Hydraulikzylinder. Diese müssen das Dach nur temporär anheben da es sich in Arbeitsstellung auf den Flügeln (4,5) abstützt. Die Flügel sind auch mithilfe von Scharnieren am Grundrahmen angebracht. Der hinter Flügel (5) wird in Transportstellung an die Rückseite des Anhängers geklappt, der vordere (4) an die Innenseite der Vorderwand. Die komplette hydraulische Versorgung des mobilen Weideunterstands erfolgt über die Zugmaschine. Die Verbindung wird über hydraulische Steckkupplungen hergestellt.

## Patentansprüche

1. Mobiler Weidunterstand umfassend:
Ein verschweißter Vollverzinkter Grundrahmen (1) beplankt mit Holzpfosten (7), eine Erweiterung ("Vordach") (3), welche drehbeweglich mit dem Grundrahmen verbunden ist und hydraulisch klappbar ist.
Zwei Flügeln (4,5), die in Arbeitsstellung die seitlichen Wände des Vordachs darstellen. Die geteilte hydraulisch betätigte Achse (8) sowie die manuell klappbare Deichsel (2) für Transportfahrten.

2. Mobiler Weideunterstand nach Anspruch 1, wobei: die hydraulisch betätigte Achse (8) bestehend aus: Hydraulikzylinder (9), Stummelachse (10), Vierkantrohr (11) und Rad (12) welche mittels Bolzen mit dem Grundrahmen verbunden ist und mithilfe dieser sich der Anhänger ebenerdig absenken oder anheben lässt.

3. Mobiler Weideunterstand nach Anspruch 1, wobei: das hydraulisch klappbare Dach (3) , welches in Arbeitsstellung auf die zwei Flügeln (4,5) gelegt wird. Durch das Eigengewicht und kleine Fanglaschen hält es die Flügeln in Position und ist sogleich gegen plötzliches herunterfallen im Falle eines technischen Gebrechens gesichert.
